# EUROPEAN PATENT APPLICATION

(11) **EP 4 376 405 A1**
(43) Date of publication of application: **29.05.2024**
(21) Application number: 22844982.3
(22) Date of filing: 26.05.2022
(51) Int. Cl.: H04N 19/00

(54) **CODE STREAM PROCESSING METHOD, APPARATUS, TERMINAL DEVICE, AND STORAGE MEDIUM**

(30) Priority: 22.07.2021 CN 202110832744
(71) Applicant: ZTE Corporation, Shenzhen, Guangdong 518057 (CN)
(72) Inventor: GAO, Ying, Shenzhen, Guangdong 518057 (CN); WU, Ping, Shenzhen, Guangdong 518057 (CN); WU, Zhao, Shenzhen, Guangdong 518057 (CN); CAI, Pinlong, Shenzhen, Guangdong 518057 (CN); XIE, Shaowei, Shenzhen, Guangdong 518057 (CN)
(74) Representative: Regimbeau
(86) International application number: PCT/CN2022/095288
(87) International publication number: WO 2023/000815

(57) **Abstract**

Provided are a bitstream processing method and apparatus, a terminal device and a storage medium. The method includes: determining an image quality assessment region; determining quality assessment data of the image quality assessment region; determining image quality information, where the image quality information includes the quality assessment data; and adding the image quality information to a bitstream to obtain a processed bitstream.

## Description

### CROSS-REFERENCES TO RELATED APPLICATIONS

This application claims priority to Chinese patent application No. 202110832744.X filed on Jul. 22, 2021, the disclosure of which is incorporated herein by reference in its entirety.

### TECHNICAL FIELD

The present application relates to the technical field of communications, for example, a bitstream processing method and apparatus, a terminal device and a storage medium.

### BACKGROUND

With the continuous development of immersive media technologies, increasing video applications can provide 360-degree panoramic videos for users to watch. To provide users with more flexible and suitable video image services, image quality assessment may be performed on images.

In some cases, when quality assessment is performed on images, the image quality is calculated in units of single images, which requires a large amount of computation. Therefore, how to improve the flexibility of image quality assessment is an urgent technical problem to be solved.

### SUMMARY

The present application provides a bitstream processing method and apparatus, a terminal device and a storage medium.

In a first aspect, embodiments of the present application provide a bitstream processing method. The method includes: an image quality assessment region is determined, quality assessment data of the image quality assessment region is determined; image quality information is determined, where the image quality information includes the quality assessment data; and the image quality information is added to a bitstream so that a processed bitstream is obtained.

In a second aspect, the embodiments of the present application provide a bitstream processing method. The method includes: a processed bitstream is acquired; the processed bitstream is parsed so that image quality information is acquired; and an image quality assessment region and corresponding quality assessment data are determined according to the image quality information.

In a third aspect, the embodiments of the present application provide a bitstream processing apparatus. The bitstream processing apparatus includes a first determination module, a second determination module, a third determination module and an adding module. The first determination module is configured to determine an image quality assessment region. The second determination module is configured to determine quality assessment data of the image quality assessment region. The third determination module is configured to determine image quality information, where the image quality information includes the quality assessment data. The adding module is configured to add the image quality information to a bitstream to obtain a processed bitstream.

In a fourth aspect, the embodiments of the present application provide a bitstream processing apparatus. The apparatus includes an acquisition module, a parsing module and a determination module. The acquisition module is configured to acquire a processed bitstream. The parsing module is configured to parse the processed bitstream to acquire image quality information. The determination module is configured to determine an image quality assessment region and corresponding quality assessment data according to the image quality information.

In a fifth aspect, the embodiments of the present application provide a terminal device. The terminal device includes one or more processors and a storage apparatus configured to store one or more programs. When executed by the one or more processors, the one or more programs cause the one or more processors to implement the bitstream processing method according to the embodiments of the present application.

In a sixth aspect, the embodiments of the present application provide a storage medium storing a computer program which, when executed by a processor, causes the processor to implement any bitstream processing method according to the embodiments of the present application.

The preceding embodiments and other aspects of the present application and implementations thereof are described in more detail in the brief description of drawings, detailed description, and claims.

### BRIEF DESCRIPTION OF DRAWINGS

FIG. 1 is a flowchart of a bitstream processing method according to an embodiment of the present application;
FIG. 2 is a flowchart of another bitstream processing method according to an embodiment of the present application;
FIG. 3 is a diagram of a media bitstream according to an embodiment of the present application;
FIG. 4 is a structural diagram of a bitstream processing apparatus according to an embodiment of the present application;
FIG. 5 is a structural diagram of a bitstream processing apparatus according to an embodiment of the present application; and
FIG. 6 is a structural diagram of a terminal device according to an embodiment of the present application.

### DETAILED DESCRIPTION

To illustrate the objects, solutions and advantages of the present application clearer, embodiments of the present application are described hereinafter in detail in conjunction with the drawings. It is to be noted that if not in collision, the embodiments of the present application and features therein may be combined with each other in any manner.

The steps illustrated in the flowcharts among the drawings may be performed by, for example, a computer system capable of executing a set of computer-executable instructions. Moreover, although logical orders are illustrated in the flowcharts, the steps illustrated or described may be performed in orders different from those described herein in some cases.

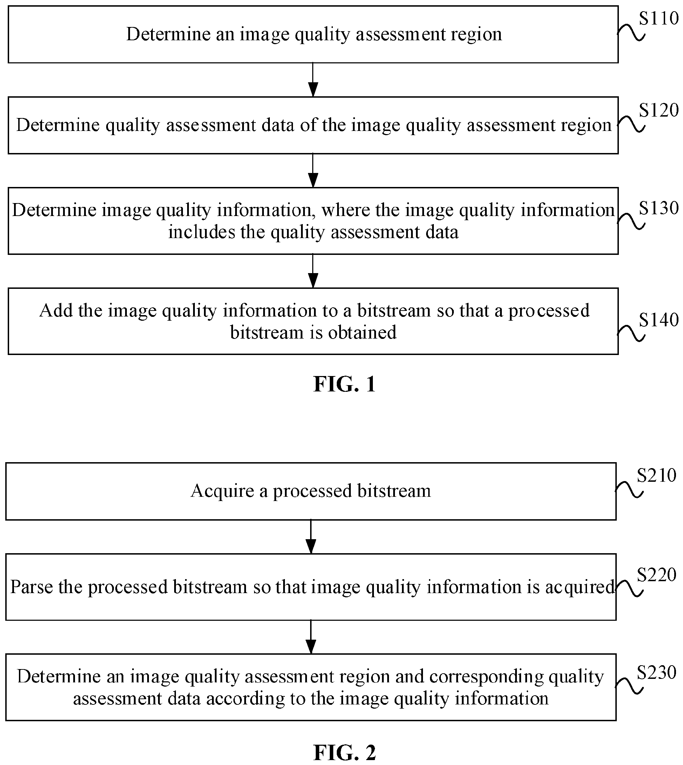

In an implementation, FIG. 1 is a flowchart of a bitstream processing method according to an embodiment of the present application. The method is applicable to the case where a bitstream is processed to improve the flexibility of image quality assessment. The method may be executed by a bitstream processing apparatus. The apparatus may be implemented by software and/or hardware and integrated on a terminal device. The terminal device may be a sending terminal device for sending a bitstream.

As shown in FIG. 1, the bitstream processing method provided in the embodiment of the present application includes S110, S120, S130 and S140.

In S110, an image quality assessment region is determined.

The image quality assessment region may be understood as an entire to-be-assessed image, multiple to-be-assessed images or partial regions of an entire to-be-assessed image. The partial regions are not limited here and may be determined based on the specific scenario. The partial regions may be regions formed after region partitioning is performed on a to-be-assessed image.

The number of image quality assessment regions may be one or more. A quality assessment region may correspond to one or more pieces of quality assessment data.

In S110, it is not limit how to determine the image quality assessment region. For example, the image quality assessment region may be determined based on an image feature of the to-be-assessed image.

In S120, quality assessment data of the image quality assessment region is determined.

The quality assessment data may be considered as data acquired after quality assessment is performed on the quality assessment region.

An image quality assessment method may be used for determining the quality assessment dataand includes a full-reference quality assessment method, a reduced-reference quality assessment method and a no-reference quality assessment method. How to determine the quality assessment data based on the image quality assessment method is not limited here.

The number of pieces of quality assessment data of the quality assessment region may be one or more.

In S130, image quality information is determined, where the image quality information includes the quality assessment data.

The image quality information may be considered as information that represents the quality of the to-be-assessed image.

After the quality assessment data is determined, the quality assessment data may be added to the image quality information in S130. The content included in the image quality information is not limited here.

In S140, the image quality information is added to a bitstream so that a processed bitstream is obtained.

After the image quality information is determined, the image quality information may be added to the bitstream in S140 so that the processed bitstream is obtained, which is conducive to a terminal device for receiving the processed bitstream to parse the image quality information. The bitstream in the embodiment may be a media bitstream.

According to the bitstream processing method provided in the embodiment of the present application, the image quality information including the quality assessment data is determined, and then the image quality information is added to the bitstream, so that the flexibility of image quality assessment of the processed bitstream is improved.

Based on the preceding embodiment, variant embodiments of the preceding embodiment are provided. It is to be noted here that for ease of description, only differences from the preceding embodiment are described in the variant embodiments.

In an embodiment, the number of image quality assessment regions is at least one; the image quality assessment region includes an entire to-be-assessed image region or multiple to-be-assessed image regions, or the image quality assessment region includes partial regions formed after region partitioning is performed on a to-be-assessed image; and a partitioning strategy is determined for the to-be-assessed image according to an image feature.

The image feature may be information that represents an image feature, and the specific content of the image feature is not limited here. The image feature may be an image type or the specific content in an image.

The image quality assessment region may be an entire to-be-assessed image region, may be multiple to-be-assessed image regions, or may be partial regions formed after region partitioning is performed on an entire to-be-assessed image region or multiple to-be-assessed image regions. The partial regions may be considered as one or more of multiple regions formed after the region partitioning is performed on the to-be-assessed image. The number of regions included in the partial regions is not limited, and the partial regions are which regions after the region partitioning is performed is not limited, which may be determined according to the actual scenario.

In an embodiment, the image quality information further includes one or more of: an image quality assessment method used for determining the quality assessment data; a timestamp for generating the quality assessment data; a device identifier for generating the quality assessment data; an identifier of the quality assessment data, that is, a serial number of the quality assessment data; the number of image quality assessment regions; information of an original image, where the information of the original image includes a link to the original image or partial statistical information of the original image, and a to-be-assessed image is a reconstructed image generated after the original image is processed; a mathematical model used for no-reference image quality assessment; indication information of partitioning of the image quality assessment region, such as pqm_picture_division_idc, where the indication information of the partitioning of the image quality assessment region may also be an image feature of the to-be-assessed image, such as pqm_picture_type; indication information about whether quality assessment methods used for different image quality assessment regions are same, such as pqm_mixed_measurement_flag, where the indication information is used for indicating whether quality assessment methods used for different image quality assessment regions are the same; indication information of an assessed component of the image quality assessment region; information of a scalable coding layer, where the information of the scalable coding layer includes the number of scalable coding layers, a scalable coding layer to which the image quality assessment region belongs, a quality assessment method such as pqm _PSNR[i] used for an i-th layer of image in a to-be-assessed image and a quality assessment method such as pqm _PSNR[i][j] used for an n-th image quality assessment region of a k-th layer of image in the to-be-assessed image, where i, k, and n are positive integers; information of an image sequence corresponding to image quality assessment regions, where an image sequence includes multiple to-be-assessed images; the number of images included in an image sequence; the number of quality assessment regions in each image in an image sequence; a quality assessment method used for determining a j-th image quality assessment region in an image sequence, where j is a positive integer; information of an m-th quality assessment region, where m is a positive integer; a quality assessment method used for determining quality assessment data of an h-th quality assessment region, where h is a positive integer; and the number of quality assessment regions in a g-th to-be-assessed image in an image sequence, where g is a positive integer.

The indication information of partitioning of the image quality assessment region may be used for indicating the number of image quality assessment regions and the calculation manner of the quality assessment data.

In the present application, a quality assessment score, that is, quality assessment data, of an image (region) may be calculated, or quality assessment scores of multiple to-be-assessed images (regions) may be calculated, where the multiple to-be-assessed images are an image sequence.

Multiple quality assessment regions correspond to a group of pieces of quality assessment data. Multiple quality assessment regions may be multiple quality assessment regions in a to-be-assessed image, or may be quality assessment regions in multiple to-be-assessed images. Multiple quality assessment regions may be considered as a quality assessment region sequence.

The combination manner of the content included in the quality information is not limited in the embodiment and may be determined by those skilled in the art based on the actual application scenario.

In an embodiment, the image quality information further includes: partitioning information of the image quality assessment region and indication information of whether the partitioning information exists, where the partitioning information of the image quality assessment region includes one or more of: an identifier of the image quality assessment region, a position of the image quality assessment region, or a size of the image quality assessment region.

In an embodiment, determining the image quality assessment region includes determining an image quality assessment region of a to-be-assessed image according to an image feature of the to-be-assessed image.

Different image features correspond to different image quality assessment regions. The specific manner for determining the image quality assessment region is determined based on the selected image feature and is not limited here.

In an embodiment, adding the image quality information to the bitstream so that the processed bitstream is obtained includes the following.

Supplemental enhancement information is generated according to the image quality information.

The supplemental enhancement information is added to the bitstream so that the processed bitstream is obtained.

When the supplemental enhancement information is generated according to the image quality information, the image quality information may be added to the supplemental enhancement information.

In an embodiment, adding the image quality information to the bitstream so that the processed bitstream is obtained includes the following.

The image quality information is written into a media file, or the image quality information is written as level information of the corresponding image quality assessment region into a media file.

The media file is added to the bitstream so that the processed bitstream is obtained.

In an embodiment, one image quality assessment region corresponds to one or multiple pieces of quality assessment data, and the multiple pieces of quality assessment data are determined through quality assessment on different components of different coding layers of a to-be-assessed image; or the multiple pieces of quality assessment data are determined through quality assessment on different components of an image sequence; or the multiple pieces of quality assessment data are determined by using the same or different quality assessment methods on the one image quality assessment region.

In an embodiment, the same or different quality assessment methods are used for different image quality assessment regions.

In an implementation, FIG. 2 is a flowchart of another bitstream processing method according to an embodiment of the present application. The method is applicable to the case of improving the flexibility of image quality assessment. The method may be executed by a bitstream processing apparatus. The apparatus may be executed by software and/or hardware and integrated on a terminal device for receiving a processed bitstream.

As shown in FIG. 2, the bitstream processing method provided in the embodiment of the present application includes S210, S220 and S230.

In S210, a processed bitstream is acquired.

In S220, the processed bitstream is parsed so that image quality information is acquired.

The specific parsing means is not limited here. The specific parsing means is determined based on the specific means in which the terminal device for sending the processed bitstream generates the processed bitstream. For example, the image quality information is acquired from a media file of the processed bitstream or the image quality information is acquired from supplemental enhancement information.

In S230, an image quality assessment region and corresponding quality assessment data are determined according to the image quality information.

In S230, the content included in the image quality information may be extracted so that the image quality assessment region and the corresponding quality assessment data are determined. For example, the content such as indication information of partitioning of the image quality assessment region, the number of image quality assessment regions and a used quality assessment method is acquired so that the image quality assessment region and the quality assessment data are determined.

For the content that is not yet exhaustive in the embodiment, reference may be made to the preceding embodiments. Details are not repeated here.

According to the bitstream processing method provided in the embodiment of the present application, the processed bitstream including the image quality information is acquired, and then the processed bitstream is parsed so that the corresponding image quality assessment region and quality assessment data are acquired. In this manner, the flexibility of image quality assessment is effectively improved.

An example is used for describing the present application below. The bitstream processing method provided in the embodiment of the present application may be considered as a processing method of adding image quality information to a media bitstream. In the present application, an image quality metric region, that is, an image quality assessment region, is determined according to a feature of an image, that is, an image feature, then a quality assessment score, that is, quality assessment data, of each image quality metric region is calculated, and image quality information including the quality assessment score corresponding to the image quality metric region is written into a media bitstream. The image quality information corresponding to the image quality assessment region is provided in the media bitstream so that the application receiving the media bitstream can further provide more flexible and suitable video image services according to the image quality information based on the image quality metric region (that is, the image quality assessment region) provided by the coding terminal.

With the continuous development of immersive media technologies, increasing video applications can provide 360-degree panoramic videos for users to watch. However, the range of human viewpoints is generally about 120 degrees, so that the actual video image that the user views at a certain moment is not a complete 360-degree panoramic video image, but only part of the image corresponding to the current viewpoint of the user. Moreover, the perception of different users on the image is not exactly the same. Different users have different levels of attention to different regions, different target objects or different colors on the image. Therefore, when the user is watching immersive videos, if a more flexible watching or processing manner can be provided according to requirements and preferences of the user and in combination with characteristics of the scenario, or according to preset settings, the user is provided with video images corresponding to the more matched image quality, thus having the better experience. The International Organization for Standardization (ISO)/International Electrotechnical Commission (IEC) 23090-2 Omnidirectional Media Format (OMAF) standard specifies quality levels related to the quality to indicate a relative quality order of quality level regions. Values of the ranking may be derived from specific quality metrics. In ISO/IEC 23090-6, that is, immersive media metrics, also uses the quality ranking to measure viewpoint switching latency.

Image quality assessment is used for measuring various distortions in the process of image acquisition, processing, compression, storage, transmission and reproduction. An objective image quality assessment manner refers to providing a result based on digital calculation through a certain mathematical model. According to the need to refer to image information when image quality is calculated, the objective image quality assessment method is divided into three types: full-reference quality assessment, reduced-reference quality assessment and no-reference quality assessment. The full-reference quality assessment and the reduced-reference quality assessment reconstructs the quality of the reconstructed image mainly through analyzing the feature of the image and quantifying the difference between the original image and the reconstructed image. At present, the full-reference quality assessment method is mainly used in the video codec field for assessing the quality of a video image. The common full-reference objective image quality assessment methods include the peak signal-to-noise ratio (PSNR) method, the structural similarity (SSIM) method, the multiscale structural similarity (MS-SSIM) method, the VQM (video quality metric) method and the MSE (mean squared error) method. On the basis of the preceding image quality assessment methods, a series of improved quality assessment methods are also derived, such as the weighted peak signal-to-noise ratio (wPSNR) method, the weighted-to-spherically-uniform peak signal-to-noise ratio (WS-PSNR) method and the spherical peak signal-to-noise ratio (S-PSNR) method. In addition, ISO/IEC 23001-10 specifies the use of media quality metrics. International Telecommunication Union (ITU)-Telecommunication Standardization Sector (T) J. 143 specifies user requirements for objective quality assessment of videos in the digital cable television. ITU-T P.914 specifies display requirements for 3D video quality assessment. ITU-T P.1204 specifies video quality assessment for reliable transmission streaming media services up to 4K resolution.

Nowadays, video coding is no longer limited to meeting the watching needs of users. With the continuous growth and changes in user requirements, the analysis and other visual applications after video coding transmission are also more abundant. The objective image quality assessment result based on reference can only be calculated on the coder side, and carrying this information in the media bitstream can provide the application with coded image quality assessment information, so that the application can further provide more flexible and suitable video services and exploratory research work related to quality assessment according to the quality assessment information. For example, complete reference quality indicators can provide improved fidelity measurement precision for quality-oriented applications. However, these applications often cannot obtain the complete reference, and most can only use parameters such as the resolution, the bit rate, the quantization parameters or the quality ranking for quality assessment. In addition, the user-generated content from mobile devices or drones is usually pre-compressed and the capture quality is unknown. Therefore, it is necessary and meaningful to convey original quality indicators of the user-generated content to the client and the server. In another aspect, a very practical scenario in video communication is to convert existing compressed video streams into other formats/bit rates. Then decoding and recoding are performed. In this process, compression and scaling processing may be added. During the video transcoding process, further pixel processing may also be performed, such as denoising and contrast/brightness adjustment. In the preceding scenario, when corresponding operations are performed, the expected goal is to enhance the perceived video quality rather than reduce the quality. Therefore, it is meaningful for the assessment of the entire system and services to provide image quality assessment information, that is, image quality information, that is, original quality assessment information and subsequently generated quality assessment information, in the media bitstream.

In the Joint Video Expert Team (JVET) meeting, the relevant proposal proposes a scheme of supplemental enhancement information (SEI) for image quality metrics. However, the SEI information of image quality metrics in this scheme only includes the metric type (that is, the used objective image quality assessment method, such as the PSNR method and the SSIM method) and quality metric values of a luminance component and/or a chrominance component in this metric type.

In some cases, the objective quality assessment for an image only considers calculating the objective image quality in units of single images. If the user only views the image of a certain region in a panoramic video, the quality value calculated for the entire image is obviously meaningless. It is necessary to determine quality metric regions according to the image feature and calculate quality assessment scores of various quality metric regions. With the increasing development of video technologies, there will be more and more application scenarios such as panoramic videos and free-viewpoint videos that can play video images corresponding to the user viewpoint region according to the viewpoint of the user, and calculating image quality assessment scores according to regions is also more meaningful. Generally, the objective image quality assessment result based on reference can only be calculated on the coder side, and the SEI information carrying this information can provide relevant information for the application, so that the application can further provide more flexible and suitable video services according to quality information.

The present application achieves bitstream processing through embodiments described below.

### Embodiment one

The embodiment of the present application provides a media bitstream processing method. According to the method, an image quality assessment region is determined according to an image feature of a to-be-assessed image, that is, an image of which the quality is to be assessed, and a quality assessment score corresponding to the quality assessment region is calculated and written into a media bitstream.

The embodiment includes S101, S102, S103, S104 and S105 below.

In S101, an image of which the quality is to be assessed is acquired.

The image of which the quality is to be assessed is a reconstructed image generated after an original image is separately coded and decoded. The original image refers to an image before coding and compression. Unless otherwise specified, the image may be a single still image or a frame of image data in a video.

In S102, an image quality assessment region is determined according to an image feature.

The image feature may be an image type. The image type may include ordinary images and non-ordinary images. The non-ordinary images include at least 360-degree panoramic video images, free-viewpoint video images and other multi-viewpoint video images.

If the image is an ordinary image, the image quality assessment region is an entire image region. If the image is a non-ordinary image, the image may be partitioned into different regions, and each region corresponds to an image quality assessment region. Generally, the partitioned image quality assessment regions correspond to viewpoint regions that the user can choose to view, but this solution does not limit the partitioning manner of image quality assessment regions.

The image type including ordinary images and non-ordinary images in the embodiment is only an example. Images may also be classified according to actual types of images or according to other image classification methods that may be used for partitioning image viewpoint regions.

In addition, the image feature may also be image content. For example, the image quality assessment regions are partitioned according to whether the image includes image content such as people and vehicles. Alternatively, the image quality assessment regions are partitioned according to whether movements or other changes occur in the image content.

In the H.265/High Efficiency Video Coding (HEVC) standard and the Versatile Video Coding (VVC) standard, an image may be partitioned into tiles and slices, and VVC also supports partitioning an image into sub-images (i.e., subpicture). Therefore, in this solution, a quality assessment region may correspond to an image or a sub-image, or a quality assessment region may include one or more tiles, or a quality assessment region may include one or more slices.

In S103, a quality assessment score corresponding to the image quality assessment region is calculated and image quality information is determined.

To calculate the quality assessment score corresponding to the image quality assessment region, the image quality assessment method to be used should be determined first. If the used image quality assessment method is the full-reference quality assessment method, it is necessary to use the pixel value of the image quality assessment region and the pixel value of the region of the original image corresponding to the image quality assessment region to calculate the quality assessment score corresponding to the image quality assessment region according to a quality assessment mathematical model provided by the full-reference image quality assessment method. If the used image quality assessment method is the reduced-reference quality assessment method, it is necessary to use the image quality assessment region and partial statistical information extracted from the original image required by the reduced-reference image quality assessment method to calculate the quality assessment score corresponding to the image quality assessment region according to a quality assessment mathematical model provided by the method. For example, a digital watermark in the image may be extracted as the partial statistical information, or a visual sensitivity coefficient in the image may be extracted as the partial statistical information. If the used image quality assessment method is the no-reference quality assessment method, it is not necessary to use the original image, and the quality assessment score corresponding to the image quality assessment region is directly calculated according to a quality assessment mathematical model provided by the no-reference quality assessment method. If the no-reference quality assessment method is based on a neural network, the mathematical model should include at least information such as a neural network model and network parameters, and may further provide a data set or a training set used by the neural network model.

The quality assessment score may correspond to one quality assessment region or multiple quality assessment regions. The multiple quality assessment regions may be quality assessment regions at different positions in the same image, or may be quality assessment regions in multiple images.

The image quality information should include the quality assessment score corresponding to at least one image quality assessment region.

The image quality information may include the image quality assessment method used for the quality assessment score corresponding to at least one image quality assessment region.

If the number of image quality assessment regions is two or more, the image quality information should include the number of image quality assessment regions.

If the number of image quality assessment regions is two or more, the image quality information may include image quality assessment region partitioning information, which may include one or more of attributes such as serial numbers of the image quality assessment regions, positions of the image quality assessment regions, or sizes of the image quality assessment regions.

If the media bitstream is a scalable coding bitstream, the image quality information may also include information of a scalable coding layer. The information of the scalable coding layer may include the number of scalable coding layers and a scalable coding layer to which the image quality assessment region belongs.

In some embodiments, if the image quality assessment method included in the image quality information is the full-reference image quality assessment method or the reduced-reference image quality assessment method, the image quality information may also include information of the original image. The information of the original image may be a link to acquiring the original image or partial statistical information of the original image.

If the image quality assessment method included in the image quality information is the no-reference image quality assessment method, the image quality information may include a mathematic model used by the no-reference image quality assessment method. If the no-reference quality assessment method is based on a neural network, the mathematical model may include information such as a neural network model and network parameters and/or information of a data set used by the neural network model.

As mentioned in the background, if a video bitstream may be transcoded or coded and re-coded during transmission, more than one quality assessment scores may exist for one quality assessment region. If the number of quality assessment scores corresponding to the same quality assessment region is greater than or equal to two, the image quality information should include image quality assessment methods respectively used for multiple quality assessment scores corresponding to the same image quality assessment region. The image quality assessment methods may be of different assessment types, including the full-reference image quality assessment method, the reduced-reference image quality assessment method and the no-reference image quality assessment method. In addition, the image quality information may further include one or more pieces of information such as a timestamp for generating each quality assessment score, a device ID for generating each quality assessment score and a serial number for generating each quality assessment score.

Different image quality assessment methods may be used for different quality assessment regions. The image quality assessment method may be selected according to an image feature included in the image quality assessment region. For example, if the image quality assessment region is partitioned according to image content as the image feature into an image quality assessment region including a key character and a background image quality assessment region not including key content, different image quality assessment methods may be used respectively.

Different image quality assessment methods generally have specific assessment scales. For example, for the PSNR method, the score generally varies in the range of 20 decibels (dB) to 60dB; for the SSIM method, the score generally varies in the range of 0 to 1. The quality assessment score in the solution may be a score originally calculated through the image quality assessment method or a value converted through mathematical formulas, such as an operation of rounding the original score or grading the original score.

In S104, image quality assessment information, that is, the image quality information, is written into the media bitstream.

In an implementation, corresponding image quality assessment SEI information is generated according to the image quality assessment information and written into the media bitstream. The image quality assessment SEI information may be understood as SEI information including the image quality information.

In addition to that the corresponding image quality assessment SEI information generated according to the image quality assessment information is used, the image quality assessment region and the corresponding quality assessment score may also be used as level information of the image quality assessment region and written in different parts of the media bitstream as needed, such as the media description part. The image quality assessment information may also be written in a corresponding parameter set as needed. The present application does not limit the manner of writing the image quality assessment information into the media bitstream.

In S105, the media bitstream is sent or stored.

The media bitstream of the image quality assessment region and the corresponding quality assessment score is sent or stored. When the image quality assessment region and the corresponding quality assessment score are used as the level information of the image quality assessment region, the media bitstream may not be sent or stored according to a scanning order, but may be sent or stored according to different attributes of the level information.

### Embodiment two

The embodiment provides an example of using the image quality assessment SEI information to achieve S 104 in which "the image quality information is written into the media bitstream" in embodiment one.

In an implementation, the image quality information may be written into supplemental enhancement information in the video bitstream. Table 1 shows a schematic table of writing the image quality information into supplemental enhancement information provided in the embodiment of the present application. The specific example is shown in the structure in the table below.

**Table 1 Schematic table of writing image quality information into supplemental enhancement information provided in the embodiment of the present application**

| | |
|---|---|
| sei_payload( payloadType, payloadSize ) { | Descriptor |
| ...... | |
| if ( payloadType = = PIC_QUALITY_MEASURE_INFO) { | |
| ...... | |
| pic_quality_measurement( payloadSize ); | |
| ...... | |
| } | |
| } | |

The SEI information includes a payload type payloadType and a payload size payloadSize. payloadType is used for indicating the type of the SEI information; for example, if payloadType is PIC_QUALITY_Measure_INFO, it is indicated that the SEI information is the image quality assessment SEI information. payloadSize includes the actually carried image quality information. Table 2 shows a schematic table of the payload size carrying the image quality information provided in the embodiment of the present application. The table is shown below.

**Table 2 Schematic table of the payload size carrying image quality information provided in the embodiment of the present application**

| | |
|---|---|
| picture_quality_measurement( payloadSize ) { | Descriptor |
| pqm_picture_type | u(1) |
| pqm_mixed_measurement_flag | u(1) |
| if( ! pqm_mixed_measurement_flag) | |
| pqm_measurement_method | u(8) |
| pqm_single_component_flag | u(1) |
| if( pqm_picture_type = = 0 ){ | |
| for(i=0; i< (pqm_single_component_flag ? 1 : 3 ); i++ ){ | |
| if (pqm_mixed_measurement_flag) | |
| pqm_measurement_method | u(8) |
| if (pqm_measurement_method = = 0) | |
| pqm_PSNR[i] | u(16) |
| else if (pqm_measurement_method = = 1) | |
| pqm_SSIM[i] | u(8) |
| else if (pqm_measurement_method = = 2) | |
| pqm _VQM[i] | u(8) |
| else if (pqm_measurement_method = = 2) | |
| pqm_MSSSIM[i] | u(8) |
| ... | |
| } | |
| } | |
| if ( pqm_picture_type = = 1 ){ | |
| num_quality_regions | u(8) |
| pqm_quality_region_info_present_flag | u(1) |
| for (i=0; i < num_quality_regions; i ++){ | |
| if (pqm_quality_region_info_present_flag) | |
| pqm_quality_region_info[i]() | |
| for (j=0; j< (pqm_single_component_flag ? 1 : 3); j++ ){ | |
| if (pqm_mixed_measurement_flag) | |
| pqm_measurement_method | u(8) |
| if (pqm_measurement_method = = 0) | |
| pqm_PSNR[i][j] | u(16) |
| else if (pqm_measurement_method = = 1) | |
| pqm_SSIM[i][j] | u(8) |
| else if (pqm_measurement_method = = 2) | |
| pqm_VQM[i][j] | u(8) |
| else if (pqm_measurement_method = = 2) | |
| pqm _MSSSIM[i][j] | u(8) |
| ... | |
| } | |
| } | |
| } | |

pqm_picture_type indicates an image type associated with the SEI information. As described in S102 and S103 in example one, when pqm_picture_type=0, it is indicated that the image associated with the SEI information is an ordinary image, and the image quality assessment region is an entire image region; when pqm_picture_type=1, it is indicated that the image associated with the SEI information is a non-ordinary image, and the image quality assessment region may be different quality assessment regions partitioned from an entire image or may be different quality assessment regions partitioned from a sub-image.

It is to be noted that just an example of pqm_picture_type as the image feature is provided here. As described in embodiment one, the image feature may also be content in the image, so that whether the quality assessment region is partitioned from the image is determined according to the content in the image and indication information of partitioning of the image quality assessment region is determined. Table 3 is a schematic table of indication information of partitioning of the image quality assessment region provided in the embodiment of the present application, and the table below provides a possible example.

**Table 3 Schematic table of indication information of partitioning of the image quality assessment region provided in the embodiment of the present application**

| Values of pqm_picture_division_idc | Meaning |
|---|---|
| 0 | Only one image quality assessment region exists, and only the quality assessment score corresponding to the one image quality assessment region is calculated |
| 1 | Multiple image quality assessment regions are included, and quality assessment scores of the multiple image quality assessment regions are calculated |
| 2 | Multiple image quality assessment regions are included, and quality assessment scores of the multiple image quality assessment regions and an average quality assessment score of the multiple image quality assessment regions are both calculated |

In addition, when an image needs to be partitioned into multiple image quality assessment regions for quality assessment, the total of the multiple image quality assessment regions may be a complete image or just a partial region of an image.

pqm_mixed_measurement_flag indicates whether different quality assessment methods are supported for different image quality assessment regions. When pqm_mixed_measurement_flag=0, it is indicated that the same quality assessment method is used for all image quality assessment regions. When pqm_mixed_measurement_flag=1, it is indicated that the same quality assessment method is used for all image quality assessment regions.

As described in S 102 in embodiment one, if the image quality assessment region is partitioned according to image content as the image feature into an image quality assessment region including a key character and a background image quality assessment region not including key content, different image quality assessment methods may be used respectively. No special explanation is provided in subsequent embodiments, and it is supported by default that pqm_mixed_measurement_flag=1, that is, the same quality assessment method is used for all image quality assessment regions.

pqm_measurement_method indicates the used image quality assessment method. Table 4 is a schematic table indicating image quality assessment methods provided in the embodiment of the present application, and specific indication manners are shown in the table below.

**Table 4 Schematic table indicating image quality assessment methods provided in the embodiment of the present application**

| pqm_measurement_method | Image quality assessment method |
|---|---|
| 0 | PNSR |
| 1 | SSIM |
| 2 | VQM |
| 3 | MS-SSIM |
| Reserved | ... |

The embodiment only provides an example of values of image quality assessment methods. Any quality assessment method used for assessing the image quality is allowed, including simultaneously using two or more image quality assessment methods, or using an external quality assessment method registration mechanism to identify different quality assessment methods.

pqm_single_component_clag indicates whether to only perform quality assessment on a single component of the image quality assessment region. When pqm_single_component_flag=1, it is indicated that the quality assessment is performed on only a single component in a color space of the image quality assessment region; when pqm_single_component_flag=0, it is indicated that the quality assessment needs to be performed on all components in the color space of the image quality assessment region separately. Different strategies may be used for multiple quality assessment regions. That is, for some quality assessment regions, the quality assessment is performed on only a single component; for some quality assessment regions, the quality assessment is performed on all components.

The color space is represented in multiple manners. For example, the common RGB color space describes colors through three primary colors, with component R representing Red, component G representing Green and component B representing Blue. The YUV color space describes colors through luminance and chrominance, with the luminance component being Y and the chrominance component being composed of two independent signals, generally represented as U and V or Cb and Cr. In the following embodiments, YUV is used as an example for description, and unless otherwise specified, the quality assessment is performed on only the luminance component Y by default.

pqm_PSNR[i] indicates the quality assessment score of the image luminance component Y calculated by the quality assessment method PSNR or the quality assessment scores of image chrominance components U and V calculated by the quality assessment method PSNR.

pqm_SSIM[i] indicates the quality assessment score of the image luminance component Y calculated by the quality assessment method SSIM or the quality assessment scores of image chrominance components U and V calculated by the quality assessment method SSIM.

pqm _VQM[i] indicates the quality assessment score of the image luminance component Y calculated by the quality assessment method VQM or the quality assessment scores of image chrominance components U and V calculated by the quality assessment method VQM.

pqm _MSSSIM[i] indicates the quality assessment score of the image luminance component Y calculated by the quality assessment method MS-SSIM or the quality assessment scores of image chrominance components U and V calculated by the quality assessment method MS-SSIM.

num_quality_regions_indicates the number of image quality assessment regions.

pqm_quality_region_info_present_flag indicates whether quality assessment region partitioning information exists. When pqm_quality_region_info_present_flag=1, it is indicated that the quality assessment region partitioning information exists; when pqm_quality_region_info_present_flag=0, it is indicated that no quality assessment region partitioning information exists. At this time, the region partitioning information in panoramic image information may be used by default, or the quality assessment region partitioning information may be individually transmitted in the media bitstream.

pqm_quality_region_info[i]() indicates information of an i-th quality assessment region, that is, partitioning information of the quality assessment region. The information of the quality assessment region may further include one or more of attributes such as a serial number of an image quality assessment region, a position of an image quality assessment region or a size of an image quality assessment region. The position of the image quality assessment region may include a horizontal position of the image quality assessment region in the entire image and a vertical position of the image quality assessment region in the entire image. Alternatively, the position of the image quality assessment region may include a coordinate of an upper left pixel of the image quality assessment region in a horizontal direction of the entire image and a coordinate of the upper left pixel of the image quality assessment region in a vertical direction of the entire image. The size of the image quality assessment region may include the width of the image quality assessment region and the height of the image quality assessment region.

pqm _PSNR[i][j] indicates the quality assessment score of the luminance component Yin the i-th image quality assessment region calculated by the quality assessment method PSNR or the quality assessment scores of the chrominance components U and V in the i-th image quality assessment region calculated by the quality assessment method PSNR.

pqm_SSIM[i][j] indicates the quality assessment score of the luminance component Y in the i-th image quality assessment region calculated by the quality assessment method SSIM or the quality assessment scores of the chrominance components U and V in the i-th image quality assessment region calculated by the quality assessment method SSIM.

pqm _VQM[i][j] indicates the quality assessment score of the luminance component Y in the i-th image quality assessment region calculated by the quality assessment method VQM or quality assessment scores of the chrominance components U and V in the i-th image quality assessment region calculated by the quality assessment method VQM.

pqm_MSSSIM[i][j] indicates the quality assessment score of the luminance component Y in the i-th image quality assessment region calculated by the quality assessment method MS-SSIM or the quality assessment scores of the chrominance components U and V in the i-th image quality assessment region calculated by the quality assessment method MS-SSIM.

In the embodiment, the quality assessment region corresponding to the quality assessment score is a single image or a certain quality assessment region included within a single image. In this case, the persistence scope of the image quality assessment SEI information carrying the image quality assessment information is a picture unit (PU) including the image quality assessment SEI information, indicating that the image quality assessment SEI information only applies to a frame of image associated with the image quality assessment SEI information.

### Embodiment three

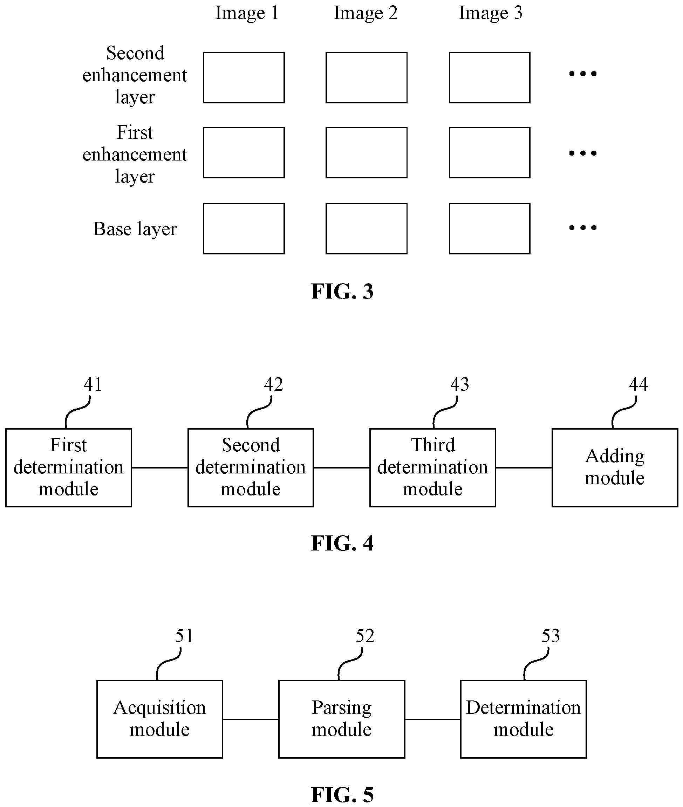

The H.265/High Efficiency Video Coding (HEVC) standard and the H.266/Versatile Video Coding (VVC) standard set by the Joint Video Expert Team (JVET) under ISO/IEC and ITU both support the concept of "multilayer video coding/scalable video coding". FIG. 3 is a diagram of a media bitstream according to an embodiment of the present application. As shown in FIG. 3, the media bitstream may include one base layer and at least one enhancement layer, so that video images of different qualities can be provided. At this time, image 1 is taken as an example. One quality assessment region in image 1 may have multiple quality assessment scores, which correspond to the base layer, a first enhancement layer and a second enhancement layer respectively.

The embodiment provides an example of using the image quality assessment SEI information to achieve S 104 in which "the image quality information is written into the media bitstream" in embodiment one in the scalable coding condition. Table 5 is a schematic table of writing image quality information into a media bitstream provided in the embodiment of the present application.

pqm_picture_type indicates an image type associated with the SEI information. Reference is made to the description of pqm_picture_type in embodiment two.

pqm_measurement_method indicates the used image quality assessment method, and reference is made to the description of pqm_measurement_method in embodiment two.

pqm_max_layers_minus1 indicates the number of coding layers. The value of pqm_max_layers_minus1 should be equal to the value of vps_max_layers_minus1 in a video parameter set (VPS).

pqm _PSNR[i] indicates the quality assessment score of the i-th layer of image calculated by the quality assessment method PSNR.

pqm_SSIM[i] indicates the quality assessment score of the i-th layer of image calculated by the quality assessment method SSIM.

num_quality_regions indicates the number of image quality assessment regions.

pqm_quality_region_info[j]() indicates information of a j-th quality assessment region. Reference is made to the description of pqm_quality_region_info[i]() in embodiment two.

pqm_PSNR[i][j] indicates the quality assessment score of the j-th image quality assessment region of the i-th layer of image calculated by the quality assessment method PSNR.

pqm_SSIM[i][j] indicates the quality assessment score of the j-th image quality assessment region of the i-th layer of image calculated by the quality assessment method SSIM.

It is to be noted that in the embodiment, it is only for the simplicity of the solution to highlight characteristics of multilayer encoding, so that pqm_single_component_flag is omitted in the provided SEI information example, and it is assumed that pqm_single_component_flag=1, that is, the quality assessment is performed only on the luminance component of the image. However, the solution supports the case where pqm_single_component_flag=0, that is, the quality assessment is performed on the luminance component and the chrominance component of the image separately.

**Table 5 Schematic table of writing image quality information into a media bitstream provided in the embodiment of the present application**

| | |
|---|---|
| picture_quality_measurement( payloadSize ) { | Descriptor |
| pqm_picture_type | u(1) |
| pqm_measurement_method | u(8) |
| pqm_max_layers_minus1 | u(6) |
| if( pqm_picture_type = = 0 ){ | |
| for(i=0; i< = pqm_max_layers_minus1; i++ ){ | |
| if (pqm_measurement_method = = 0) | |
| pqm_PSNR[i] | u(16) |
| else if (pqm_measurement_method = = 1) | |
| pqm_SSIM[i] | u(8) |
| ... | |
| } | |
| } | |
| if ( pqm_picture_type = = 1 ){ | |
| num_quality_regions | u(8) |
| for (i=0; i < = pqm_max_layers_minus1; i ++){ | |
| for (j=0; j< num_quality_regions; j++ ){ | |
| pqm_quality region info [j]() | |
| if (pqm_measurement_method = = 0) | |
| pqm_PSNR[i][j] | u(16) |
| else if (pqm_measurement_method = = 1) | |
| pqm_SSIM[i][j] | u(8) |
| ... | |
| } | |
| } | |
| } | |

This solution may also support using different quality assessment schemes on the luminance component and the chrominance component for different coding layers. For example, the quality assessment is performed on the luminance component of the image of the base layer and the chrominance component of the image of the base layer separately, while the quality assessment is performed only on the luminance component of the image of the enhancement layer. For another example, the quality assessment is performed on the luminance component of the image of the highest enhancement layer and the chrominance component of the image of the highest enhancement layer separately, while the quality assessment is performed only on the luminance component of the image of the base layer.

In the embodiment, the quality assessment region corresponding to the quality assessment score is a single image of the base layer or a single image of the enhancement layer, or may be a certain quality assessment region included within a single image of the base layer or a single image of the enhancement layer. In this case, the persistence scope of the image quality assessment SEI information carrying the image quality assessment information is an access unit (PU) including the image quality assessment SEI information, indicating that the image quality assessment SEI information only applies to a frame of image associated with the image quality assessment SEI information.

### Embodiment four

The embodiment provides an example of achieving S 104 in which "the image quality information is written into SEI information in the media bitstream" in embodiment one for multiple frames of images. Table 6 is a schematic table of writing image quality information into a bitstream provided in the embodiment of the present application.

**Table 6 Schematic table of writing image quality information into a bitstream provided in the embodiment of the present application**

| | |
|---|---|
| picture_quality_measurement( payloadSize ) { | Descriptor |
| pqm_picture_type | u(1) |
| pqm_measurement_method | u(8) |
| pqm_sequence_info | ue(v) |
| pqm_quality_of sequence flag | u(1) |
| if( pqm_picture_type = = 0 ){ | |
| if (pqm_quality_of_sequence_flag = = 1){ | |
| if (pqm_measurement_method = = 0) | |
| pqm_sequence_PSNR | u(16) |
| ... | |
| } | |
| if (pqm_quality_of_sequence_flag = = 0){ | |
| pqm_num_of_picture | u(8) |
| for (i=0; i < = pqm_num_of_picture; i ++){ | |
| if (pqm_measurement_method = = 0) | |
| pqm_PSNR[i] | u(16) |
| ... | |
| } | |
| } | |
| if ( pqm_picture_type = = 1 ){ | |
| if (pqm_quality_of_sequence_flag = = 1){ | |
| num_quality_regions | u(8) |
| for ( i=0; i< num_quality_regions; i++ ){ | |
| pqm_quality_region_info [i]() | |
| if (pqm_measurement_method = = 0) | |
| pqm_sequence_PSNR[i] | u(16) |
| else if ... | |
| } | |
| } | |
| if (pqm_quality_of_sequence_flag = = 0){ | |
| pqm_num_of_picture | u(8) |
| for (i=0; i < = pqm_num_of_picture; i ++){ | |
| num_quality_regions[i] | u(8) |
| for ( j=0; j< num_quality_regions[i]; j++ ){ | |
| pqm_quality_region_info [i][j]() | |
| if (pqm_measurement_method = = 0) | |
| pqm_PSNR[i][j] | u(16) |
| else if ... | |
| } | |
| } | |
| } | |
| } | |

pqm_picture_type indicates an image type associated with the SEI information. Reference is made to the description of pqm_picture_type in embodiment two.

pqm_measurement_method indicates the used image quality assessment method, and reference is made to the description of pqm_measurement_method in embodiment two.

pqm_sequence_info indicates information of an image sequence associated with the image quality assessment SEI information. The information of the image sequence includes at least identifier numbers of various frames of images in the image sequence, and information of an image in the image sequence may be determined according to the identifier number of the image. The identifier number of the image may be a decoding order number or a playing order number of the image, or may be any other manner for determining the image information.

pqm_quality_of sequence flag indicates whether to calculate the quality assessment score for the image sequence. When the value of pqm_quality_of_sequence_flag is 1, it is indicated that only one overall quality assessment score is calculated for all images in the image sequence; when the value of pqm_quality_of_sequence_flag is 0, it is indicated that the quality assessment score of each image in the image sequence is calculated separately.

It is specifically to be noted that the embodiment only provides an example of calculating the quality assessment score for the image sequence. For example, it may be designed that pqm_quality_of_sequence_type is used for indicating a quality assessment type of the image sequence, that is, how to calculate the quality assessment score of the image sequence. Table 7 is a schematic table of quality assessment types of an image sequence provided in the embodiment of the present application, and values of pqm_quality_of_sequence_type are shown in the table below.

**Table 7 Schematic table of quality assessment types of an image sequence provided in the embodiment of the present application**

| Values of pqm_quality_of_sequence_ type | Meaning |
|---|---|
| 0 | Only calculate the quality assessment core of each image in the image sequence |
| 1 | Only calculate the overall quality assessment score of the image sequence |
| 2 | Calculate both the overall quality assessment score of the image sequence and the quality assessment core of each image in the image sequence |

pqm_sequence_PSNR indicates the quality assessment score of the image sequence calculated by the quality assessment method PSNR.

pqm_num_of_picture indicates the number of images included in the image sequence.

pqm_PSNR[i] indicates the quality assessment score of an i-th image in the image sequence calculated by the quality assessment method PSNR.

Referring to the description in embodiment two, pqm_mixed_measurement_flag indicates whether different quality assessment methods are supported for different image quality assessment regions. In the embodiment, different and more suitable quality assessment methods may be used for an individual image assessment region and the image assessment region sequence during the actual implementation process. For example, quality assessment methods such as the PSNR method and the SSIM method may be used for the individual image assessment region, and quality assessment methods such as the VQM method and the wPSNR method may be used for the image assessment region sequence. Similarly, different quality assessment methods may also be used for different image assessment region sequences.

num_quality_regions indicates the number of quality assessment regions in each image in an image sequence.

pqm_quality_region_info[j]() indicates information of an i-th quality assessment region sequence. Reference is made to the description of pqm_quality_region_info[i]() in embodiment two. The i-th quality assessment region sequence may be considered as a sequence formed by i-th quality assessment regions in various images. For example, multiple to-be-assessed images exist, each to-be-assessed image is partitioned into multiple regions, and i-th quality assessment regions in the multiple to-be-assessed images form a quality assessment region sequence.

pqm_sequence_PSNR[i] indicates the quality assessment score of the i-th quality assessment region sequence calculated by the quality assessment method PSNR.

num_quality_regions[i] indicates the number of quality assessment regions in the i-th image in the image sequence.

pqm_quality_region_info[i][j]() indicates information of a j-th quality assessment region sequence in the i-th image in the image sequence. Reference is made to the description of pqm_quality_region_info[i]() in embodiment two.

pqm_PSNR[i][j] indicates the quality assessment score of the j-th image quality assessment region of the i-th image calculated by the quality assessment method PSNR.

As in embodiment three, the embodiment also omits pqm_single_component_flag in the provided SEI information example, and it is assumed that pqm_single_component_flag=1, that is, the quality assessment is performed only on the luminance component of the image or the image sequence. However, the solution supports the case where pqm_single_component_flag=0, that is, the quality assessment is performed on the luminance component and the chrominance component of the image or the image sequence separately.

The solution may also support using different quality assessment schemes on the luminance component and the chrominance component for the image sequence and the single image. For example, the quality assessment is performed on the luminance component of the single image and the chrominance component of the single image separately, while the quality assessment is performed only on the luminance component of the image sequence. For another example, the quality assessment is performed on the luminance component of the image sequence and the chrominance component of the image sequence separately, while the quality assessment is performed only on the luminance component of the single image.

In the embodiment, the quality assessment region corresponding to the quality assessment score is an image sequence or a quality assessment region sequence included in images. In this case, the persistence scope of the image quality assessment SEI information carrying the image quality assessment information is a coded video sequence (CVS) or a coded layer video sequence (CLVS) including the image quality assessment SEI information.

### Embodiment five

The embodiment provides another example of achieving S104 in which "the image quality information is written into the media bitstream" in embodiment one using SEI information. Table 8 is a schematic table of writing image quality information into a media bitstream provided in the embodiment of the present application.

**Table 8 Schematic table of writing image quality information into a media bitstream provided in the embodiment of the present application**

| | |
|---|---|
| picture_quality_measurement( payloadSize ) { | Descriptor |
| pqm_cancel_flag | u(1) |
| if (! pqm_cancel_flag){ | |
| pqm_persistence_flag | u(1) |
| pqm_picture_type | u(1) |
| pqm_measurement_method | u(8) |
| if( pqm_picture_type = = 0 ){ | |
| if (pqm_measurement_method = = 0) | |
| pqm_PSNR | u(16) |
| else if ...... | |
| } | |
| if ( pqm_picture_type = = 1 ){ | |
| num_quality_regions | u(8) |
| for ( i=0; i< num_quality_regions; i++ ){ | |
| pqm_quality region info [i]() | |
| if (pqm_measurement_method = = 0) | |
| pqm_sequence_PSNR[i] | u(16) |
| else if ... | |
| } | |
| } | |
| } | |
| } | |

When the value of pqm_cancel_flag is 1, it is indicated that the image quality assessment SEI information cancels the persistence of any previous image quality assessment SEI message and relevant SEI functions are not used. On the contrary, when the value of pqm_cancel_flag is 0, it is indicated that the image quality assessment information is immediately following.

pqm_persistence_flag is used for indicating the persistence of the associated image quality assessment SEI information. When pqm_persistence_flag=0, it is indicated that the image quality assessment SEI information is only applicable to the currently decoded image. When pqm_persistence_flag=1, it is indicated that the image quality assessment SEI information is applicable to the currently decoded image and continues to be used for all subsequently output images until one or more of following conditions are satisfied: (1) the bitstream ends; (2) a new image sequence starts; (3) a subsequently output image has been associated with the image quality assessment SEI information.

In the technical solution, it may also be understood as that when pqm_persistence_flag=0, pqm_persistence_flag is used for indicating that the quality assessment score of the associated image quality assessment SEI information is for the currently decoded image or the image quality assessment region in the currently decoded image; when pqm_persistence_flag=1, pqm_persistence_flag is used for indicating that the quality assessment score of the associated image quality assessment SEI information is for an image sequence composed of the currently decoded image and subsequently output images or an image quality assessment sequence in images composed of the currently decoded image and subsequently output images.

pqm_picture_type indicates an image type associated with the SEI information. Reference is made to the description of pqm_picture_type in embodiment two.

pqm_measurement_method indicates the used image quality assessment method, and reference is made to the description of pqm_measurement_method in embodiment two.

pqm_PSNR indicates the quality assessment score of the current image calculated by the quality assessment method PSNR or the quality assessment score of an image sequence composed of the current image and subsequently output images calculated by the quality assessment method PSNR.

num_quality_regions indicates the number of quality assessment regions in an image in the image sequence.

pqm_quality_region_info[i]() indicates information of the i-th quality assessment region, and reference is made to the description of pqm_quality_region_info[i]() in embodiment two.

pqm_PSNR[i] indicates the quality assessment score of the i-th image quality assessment region in the current image calculated by the quality assessment method PSNR or the quality assessment score of the i-th image quality assessment region sequence of the current image and subsequently output images calculated by the quality assessment method PSNR.

In the embodiment, pqm_cancel_flag and pqm_persistence_flag may be used for calculating the image quality assessment score for a single image quality assessment region, a group of pictures (GOP), a scenario or an image quality assessment region sequence. A single image quality assessment region includes a single image or an image quality assessment region included in a single image. An image quality assessment region sequence includes an entire image sequence or an image quality assessment region sequence composed of image quality assessment regions included in the same or different images.

### Embodiment six

The embodiment provides another example of achieving S104 in which "the image quality information is written into the media bitstream" in embodiment one.

In the embodiment, image quality assessment data is stored in a file by using the International Organization for Standardization (ISO) Base Media File Format (BMFF). An implementation is provided below.

```
 aligned(8) class PictureQualityMeasurement {
         unsigned int(1) picture_type;
     if (picture_type = 0)
       unsigned int(8) measurement_method;
       unsigned int(16) quality_result;
    if (picture_type = 1)
       unsigned int(8) num_quality_regions
    for (i = 0; i < num_quality_regions; i++){
          unsigned int(8) quality_region_info[i]()
          unsigned int(8) measurement_method[i];
          unsigned int(16) quality_result[i]; }
 }.
```

picture_type indicates an image type; when the value of picture_type is 0, it is indicated that the image is used as an image quality assessment region; when the value of picture_type is 1, it is indicated that the image is partitioned into at least two image quality assessment regions.

measurement_method indicates the used image quality assessment method, and reference is made to the description of pqm_measurement_method in embodiment two.

quality_result indicates the quality assessment result of the image calculated by the quality assessment method indicated by measurement_method.

num_quality_regions indicates the number of image quality assessment regions.

quality_region_info[i]() indicates information of an i-th quality assessment region. Reference is made to the description of pqm_quality_region_info[i]() in embodiment two.

measurement_method[i] indicates the image quality assessment method used for the i-th quality assessment region.

quality_result[i] indicates the quality assessment result of the i-th quality assessment region calculated by the quality assessment method indicated by measurement_method[i].

An example of information quality_region_info() of the quality assessment region is provided below.

```
 aligned(8) quality_region_info() {
 unsigned int(8) segment_top_left_x;
 unsigned int(8) segment_top_left_y;
 unsigned int(8) segment_width;
 unsigned int(8) segment_height;
 }.
```

segment_top_left_x indicates a coordinate of an upper left pixel of the quality assessment region in a horizontal direction in the entire image.

segment_top_left_y indicates a coordinate of an upper left pixel of the quality assessment region in a vertical direction in the entire image.

segment_width[i] indicates the pixel width of the quality assessment region.

segment_height[i] indicates the pixel height of the quality assessment region.

It is to be noted that the embodiment only provides a simple example. Similarly, solutions described in embodiments one to five may all use the ISO Base Media File Format to store image quality assessment data in files, which is not repeated here.

### Embodiment seven

In S701, a media bitstream is acquired.

The technical solution does not limit the type of the acquired media bitstream and the manner for acquiring the media bitstream.

In S702, the media bitstream is parsed so that image quality assessment information, that is, image quality information, is acquired.

The media bitstream is parsed, and the image quality information carried in the media bitstream is acquired. The image quality information may be included in SEI information in the data media for carrying.

In addition to, as described in S 104 in embodiment one, that the corresponding image quality assessment SEI information generated according to the image quality assessment information is used, the image quality assessment region and the corresponding quality assessment score may also be used as level information of the image quality assessment region and written in different parts of the media bitstream as needed, such as the media description part. Therefore, the embodiment does not limit the manner in which the image quality assessment information is acquired from the media bitstream.

In S703, the image quality assessment region and the corresponding quality assessment score are determined according to the image quality assessment information.

Before the image quality assessment region and the corresponding quality assessment score are determined according to the image quality assessment information, the method may further include: indication information of partitioning of the image quality assessment region and the number of image quality assessment regions are determined according to the image quality assessment information. Determining the image quality assessment region and the corresponding quality assessment score may further include determining the quality assessment method corresponding to the quality assessment score.

In an implementation, an embodiment of the present application provides a bitstream processing apparatus. FIG. 4 is a structural diagram of a bitstream processing apparatus according to an embodiment of the present application. The apparatus may be integrated on a terminal device. As shown in FIG. 4, the apparatus includes a first determination module 41, a second determination module 42, a third determination module 43 and an adding module 44 below.

The first determination module 41 is configured to determine an image quality assessment region.

The second determination module 42 is configured to determine quality assessment data of the image quality assessment region.

The third determination module 43 is configured to determine image quality information, where the image quality information includes the quality assessment data.

The adding module 44 is configured to add the image quality information to a bitstream to obtain a processed bitstream.

The bitstream processing apparatus provided in the embodiment is used for performing the bitstream processing method of the embodiment shown in FIG. 1. The bitstream processing apparatus provided in the embodiment has similar implementation principles and technical effects to the bitstream processing method of the embodiment shown in FIG. 1. Details are not repeated here.

On the basis of the preceding embodiment, variant embodiments of the preceding embodiment are provided. It is to be noted here that for ease of description, only differences from the preceding embodiment are described in the variant embodiments.

In an embodiment, the number of image quality assessment regions is at least one, the image quality assessment region includes an entire to-be-assessed image region or multiple to-be-assessed image regions, or the image quality assessment region includes partial regions formed after region partitioning is performed on a to-be-assessed image, and a partitioning strategy is determined for the to-be-assessed image according to an image feature.

In an embodiment, the image quality information further includes one or more of: an image quality assessment method used for determining the quality assessment data; a timestamp for generating the quality assessment data; a device identifier for generating the quality assessment data; an identifier of the quality assessment data; the number of image quality assessment regions; information of an original image, where the information of the original image includes a link to the original image or partial statistical information of the original image, and a to-be-assessed image is a reconstructed image generated after the original image is processed; a mathematical model used for no-reference image quality assessment; indication information of partitioning of the image quality assessment region; indication information about whether quality assessment methods used for different image quality assessment regions are same; indication information of an assessed component of the image quality assessment region; information of a scalable coding layer, where the information of the scalable coding layer includes the number of scalable coding layers, a scalable coding layer to which the image quality assessment region belongs, a quality assessment method used for an i-th layer of image in a to-be-assessed image and a quality assessment method used for an n-th image quality assessment region of a k-th layer of image in the to-be-assessed image, where i, k, and n are positive integers; information of an image sequence corresponding to image quality assessment regions, where an image sequence includes multiple to-be-assessed images; the number of images included in an image sequence; the number of quality assessment regions in each image in an image sequence; a quality assessment method used for determining a j-th image quality assessment region in the image sequence, where j is a positive integer; information of an m-th quality assessment region, where m is a positive integer; a quality assessment method used for determining quality assessment data of an h-th quality assessment region, where h is a positive integer; and the number of quality assessment regions in a g-th to-be-assessed image in an image sequence, where g is a positive integer.

In an embodiment, the image quality information further includes: partitioning information of the image quality assessment region and indication information of whether the partitioning information exists, where the partitioning information of the image quality assessment region includes one or more of: an identifier of the image quality assessment region, a position of the image quality assessment region or a size of the image quality assessment region.

In an embodiment, the first determination module 41 is specifically configured to determine an image quality assessment region of a to-be-assessed image according to an image feature of the to-be-assessed image.

In an embodiment, adding the image quality information to the bitstream to obtain the processed bitstream performed by the adding module 44 further includes: generating supplemental enhancement information according to the image quality information; and adding the supplemental enhancement information to the bitstream to obtain the processed bitstream.

In an embodiment, adding the image quality information to the bitstream to obtain the processed bitstream performed by the adding module 44 further includes: writing the image quality information into a media file, or writing the image quality information as level information of the corresponding image quality assessment region into a media file; and adding the media file to the bitstream to obtain the processed bitstream.

In an embodiment, for the adding module 44, one image quality assessment region corresponds to one or multiple pieces of quality assessment data, and the multiple pieces of quality assessment data are determined through quality assessment on different components of different coding layers of a to-be-assessed image; or the multiple pieces of quality assessment data are determined through quality assessment on different components of an image sequence; or the multiple pieces of quality assessment data are determined by using different quality assessment methods on the one image quality assessment region.

In an embodiment, for the adding module 44, the same or different quality assessment methods are used for different image quality assessment regions.

In an implementation, an embodiment of the present application further provides a bitstream processing apparatus. The apparatus is integrated on a terminal device for receiving a processed bitstream. FIG. 5 is a structural diagram of a bitstream processing apparatus according to an embodiment of the present application. As shown in FIG. 5, the apparatus includes an acquisition module 51, a parsing module 52 and a determination module 53 below.

The acquisition module 51 is configured to acquire a processed bitstream.

The parsing module 52 is configured to parse the processed bitstream to acquire image quality information.

The determination module 53 is configured to determine an image quality assessment region and corresponding quality assessment data according to the image quality information.

The bitstream processing apparatus provided in the embodiment is used for performing the bitstream processing method of the embodiment shown in FIG. 2. The bitstream processing apparatus provided in the embodiment has similar implementation principles and technical effects to the bitstream processing method of the embodiment shown in FIG. 2. Details are not repeated here.

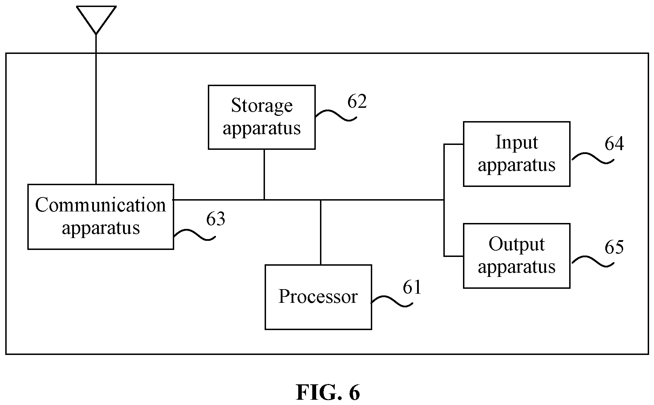

In an implementation, an embodiment of the present application provides a terminal device. FIG. 6 is a structural diagram of a terminal device according to an embodiment of the present application. As shown in FIG. 6, the terminal device provided in the embodiment of the present application includes one or more processors 61 and a storage apparatus 62. One or more processors 61 may be provided in the terminal device. In FIG. 6, one processor 61 is taken as an example. The storage apparatus 62 is configured to store one or more programs. When executed by the one or more processors 61, the one or more programs cause the one or more processors 61 to implement the bitstream processing method described in the embodiments of the present application.

The terminal device further includes a communication apparatus 63, an input apparatus 64 and an output apparatus 65.

The processor 61, the storage apparatus 62, the communication apparatus 63, the input apparatus 64 and the output apparatus 65 in the terminal device may be connected through a bus or in other manners. In FIG. 6, the connection through the bus is used as an example.

The input apparatus 64 may be used for receiving inputted digital or character information and for generating key signal input related to user settings and function control of the terminal device. The output apparatus 65 may include display devices such as a display screen.

The communication apparatus 63 may include a receiver and a transmitter. The communication apparatus 63 is configured to perform information transceiving and communication under the control of the processor 61. Information includes, but is not limited to, a processed bitstream.

As a computer-readable storage medium, the storage apparatus 62 may be configured to store software programs, computer-executable programs and modules such as program instructions/modules (for example, the first determination module 41, the second determination module 42, the third determination module 43 and the adding module 44 in the bitstream processing apparatus, or the acquisition module 51, the parsing module 52 and the determination module 53 in the bitstream processing apparatus) corresponding to the bitstream processing method described in the embodiments of the present application. The storage apparatus 62 may include a program storage region and a data storage region. The program storage region may store an operating system and an application program required by at least one function. The data storage region may store data created depending on use of the terminal device. Additionally, the storage apparatus 62 may include a high-speed random-access memory and may also include a nonvolatile memory, such as at least one magnetic disk memory, a flash memory or another nonvolatile solid-state memory. In some examples, the storage apparatus 62 may further include memories located remotely relative to the processor 61, and these remote memories may be connected to the terminal device via a network. Examples of the preceding network include, but are not limited to, the Internet, an intranet, a local area network, a mobile communication network and a combination thereof.

An embodiment of the present application further provides a storage medium storing a computer program which, when executed by a processor, causes the processor to perform any method according to the present application. The storage medium stores the computer program which, when executed by the processor, causes the processor to perform the bitstream processing method according to any embodiment of the present application.

The bitstream processing method includes: an image quality assessment region is determined, quality assessment data of the image quality assessment region is determined; image quality information is determined, where the image quality information includes the quality assessment data; and the image quality information is added to a bitstream so that a processed bitstream is obtained.

The bitstream processing method includes: a processed bitstream is acquired; the processed bitstream is parsed so that image quality information is acquired; and an image quality assessment region and corresponding quality assessment data are determined according to the image quality information.

A computer storage medium in an embodiment of the present application may adopt any combination of one or more computer-readable media. The computer-readable media may be computer-readable signal media or computer-readable storage media. For example, a computer-readable storage medium may be, but is not limited to, an electrical, magnetic, optical, electromagnetic, infrared, or semiconductor system, apparatus, or device or any combination thereof. More specific examples of the computer-readable storage medium (a non-exhaustive list) include: an electrical connection having one or more wires, a portable computer magnetic disk, a hard disk, a random-access memory (RAM), a read-only memory (ROM), an erasable programmable read-only memory (EPROM), a flash memory, an optical fiber, a portable compact disc read-only memory (CD-ROM), an optical memory, a magnetic memory or any suitable combination thereof. The computer-readable storage medium may be any tangible medium including or storing a program. The program may be used by or used in conjunction with an instruction execution system, apparatus or device.

A computer-readable signal medium may include a data signal propagated in a baseband or as part of a carrier. The data signal carries computer-readable program codes. The data signal propagated in this manner may be in multiple forms including, but not limited to, an electromagnetic signal, an optical signal or any suitable combination thereof. The computer-readable signal medium may also be any computer-readable medium other than the computer-readable storage medium. The computer-readable medium may send, propagate or transmit a program used by or used in conjunction with an instruction execution system, apparatus or device.

The program codes included in the computer-readable medium may be transmitted in any suitable medium including, but not limited to, a wireless medium, a wire, an optical cable, a radio frequency (RF) or any suitable combination thereof.

Computer program codes for performing the operations of the present application may be written in one or more programming languages or a combination of multiple programming languages. The programming languages include object-oriented programming languages such as Java, Smalltalk and C++ and may further include conventional procedural programming languages such as "C" or similar programming languages. The program codes may be executed entirely on a user computer, executed partly on a user computer, executed as a stand-alone software package, executed partly on a user computer and partly on a remote computer, or executed entirely on a remote computer or a server. In the case where the remote computer is involved, the remote computer may be connected to the user computer through any type of network including a local area network (LAN) or a wide area network (WAN), or may be connected to an external computer (for example, via the Internet provided by an Internet service provider).

The preceding are merely embodiments of the present application and are not intended to limit the scope of the present application.

It is to be understood by those skilled in the art that the term terminal device encompasses any appropriate type of radio user device such as a mobile phone, a portable data processing apparatus, a portable web browser or a vehicle-mounted mobile station.

Generally speaking, multiple embodiments of the present application may be implemented in hardware or special-purpose circuits, software, logic or any combination thereof. For example, some aspects may be implemented in hardware while other aspects may be implemented in firmware or software executable by a controller, a microprocessor or another computing apparatus, though the present application is not limited thereto.

The embodiments of the present application may be implemented through the execution of computer program instructions by a data processor of a mobile apparatus, for example, implemented in a processor entity, by hardware or by a combination of software and hardware. The computer program instructions may be assembly instructions, instruction set architecture (ISA) instructions, machine instructions, machine-related instructions, microcodes, firmware instructions, status setting data, or source or object codes written in any combination of one or more programming languages.

A block diagram of any logic flow among the drawings of the present application may represent program steps, may represent interconnected logic circuits, modules and functions, or may represent a combination of program steps and logic circuits, modules and functions. Computer programs may be stored on a memory. The memory may be of any type suitable for a local technical environment and may be implemented using any suitable data storage technology, such as, but not limited to, a read-only memory (ROM), a random-access memory (RAM), and an optical memory apparatus and system (a digital video disc (DVD) or a compact disc (CD)). Computer-readable media may include non-transitory storage media. The data processor may be of any type suitable for a local technical environment, for example, but not limited to, a general-purpose computer, a special-purpose computer, a microprocessor, a digital signal processor (DSP), an application-specific integrated circuit (ASIC), a field-programmable gate array (FGPA) and a processor based on a multi-core processor architecture.

The detailed description of several embodiments of the present application is provided above through several non-restrictive examples. However, considering the drawings and the claims, various modifications and adjustments to the preceding embodiments are apparent to those skilled in the art without deviating from the scope of the present application. Accordingly, the proper scope of the present application is determined according to the claims.

## Claims

1. A bitstream processing method, comprising:
determining an image quality assessment region;
determining quality assessment data of the image quality assessment region;
determining image quality information, wherein the image quality information comprises the quality assessment data; and
adding the image quality information to a bitstream to obtain a processed bitstream.

2. The method according to claim 1, wherein a number of image quality assessment regions is at least one; the image quality assessment region comprises an entire to-be-assessed image region or a plurality of to-be-assessed image regions, or the image quality assessment region comprises partial regions formed after region partitioning is performed on a to-be-assessed image; and a partitioning strategy is determined for the to-be-assessed image according to an image feature.

3. The method according to claim 1, wherein the image quality information further comprises one or more of:
an image quality assessment method used for determining the quality assessment data;
a timestamp for generating the quality assessment data;
a device identifier for generating the quality assessment data;
an identifier of the quality assessment data;
a number of image quality assessment regions;
information of an original image, wherein the information of the original image comprises a link to the original image or partial statistical information of the original image, and a to-be-assessed image is a reconstructed image generated after the original image is processed;
a mathematical model used for no-reference image quality assessment;
indication information of partitioning of the image quality assessment region;
indication information about whether quality assessment methods used for different image quality assessment regions are same;
indication information of an assessed component of the image quality assessment region;
information of a scalable coding layer, wherein the information of the scalable coding layer comprises a number of scalable coding layers, a scalable coding layer to which the image quality assessment region belongs, a quality assessment method used for an i-th layer of image in a to-be-assessed image and a quality assessment method used for an n-th image quality assessment region of a k-th layer of image in the to-be-assessed image, wherein i, k, and n are positive integers;
information of an image sequence corresponding to image quality assessment regions, wherein an image sequence comprises a plurality of to-be-assessed images;
a number of images comprised in an image sequence;
a number of quality assessment regions in each image in an image sequence;
a quality assessment method used for determining a j-th image quality assessment region in an image sequence, wherein j is a positive integer;
information of an m-th quality assessment region, wherein m is a positive integer;
a quality assessment method used for determining quality assessment data of an h-th quality assessment region, wherein h is a positive integer; and
a number of quality assessment regions in a g-th to-be-assessed image in an image sequence, wherein g is a positive integer.

4. The method according to claim 1, wherein the image quality information further comprises:
partitioning information of the image quality assessment region and indication information of whether the partitioning information exists, wherein the partitioning information of the image quality assessment region comprises one or more of:
an identifier of the image quality assessment region, a position of the image quality assessment region or a size of the image quality assessment region.

5. The method according to claim 1, wherein determining the image quality assessment region comprises:
determining an image quality assessment region of a to-be-assessed image according to an image feature of the to-be-assessed image.

6. The method according to claim 1, wherein adding the image quality information to the bitstream to obtain the processed bitstream comprises:
generating supplemental enhancement information according to the image quality information; and
adding the supplemental enhancement information to the bitstream to obtain the processed bitstream.

7. The method according to claim 1, wherein adding the image quality information to the bitstream to obtain the processed bitstream comprises:
writing the image quality information into a media file, or writing the image quality information as level information of the corresponding image quality assessment region into a media file; and
adding the media file to the bitstream to obtain the processed bitstream.

8. The method according to claim 1, wherein one image quality assessment region corresponds to one or a plurality pieces of quality assessment data, and the plurality pieces of quality assessment data are determined through quality assessment on different components of different coding layers of a to-be-assessed image; or the plurality pieces of quality assessment data are determined through quality assessment on different components of an image sequence; or the plurality pieces of quality assessment data are determined by using different quality assessment methods on the one image quality assessment region.

9. The method according to claim 1, wherein a same or different quality assessment methods are used for different image quality assessment regions.

10. A bitstream processing method, comprising:
acquiring a processed bitstream;
parsing the processed bitstream to acquire image quality information; and
determining an image quality assessment region and corresponding quality assessment data according to the image quality information.

11. A bitstream processing apparatus, comprising:
a first determination module configured to determine an image quality assessment region;
a second determination module configured to determine quality assessment data of the image quality assessment region;
a third determination module configured to determine image quality information, wherein the image quality information comprises the quality assessment data; and
an adding module configured to add the image quality information to a bitstream to obtain a processed bitstream.

12. A bitstream processing apparatus, comprising:
an acquisition module configured to acquire a processed bitstream;
a parsing module configured to parse the processed bitstream to acquire image quality information; and
a determination module configured to determine an image quality assessment region and corresponding quality assessment data according to the image quality information.

13. A terminal device, comprising:
one or more processors; and
a storage apparatus configured to store one or more programs;
wherein when executed by the one or more processors, the one or more programs cause the one or more processors to implement the method according to any one of claims 1 to 10.

14. A storage medium storing a computer program which, when executed by a processor, causes the processor to implement the method according to any one of claims 1 to 10.
